# EUROPEAN PATENT APPLICATION

(11) **EP 2 472 390 A2**
(43) Date of publication of application: **04.07.2012**
(21) Application number: 10839820.7
(22) Date of filing: 24.12.2010
(51) Int. Cl.: G06F 3/14, G06F 3/02, G06F 17/21

(54) **CONTENT DISPLAY DEVICE**

(30) Priority: 24.12.2009 JP 2009293425
(71) Applicant: Samsung Electronics Co., Ltd., Suwon-si, Gyeonggi-do 442-742 (KR)
(72) Inventor: NAMBU, Masanori, Osaka 562-0036 (JP); TAKIZAWA, Tomomi, Osaka 562-0036 (JP)
(74) Representative: Robinson, Ian Michael
(86) International application number: PCT/KR2010/009326
(87) International publication number: WO 2011/078623

(57) **Abstract**

An anchor operation can be facilitated by ten keys using location information on a screen of items to which predetermined tags are attached. Display location information is extracted from the screen of a plurality of items to which predetermined tags described in the content data are attached, the screen on which the content is displayed is partitioned based on the display location information so that the plurality of items exist in one region, and available buttons of the operation device are allocated to the plurality of items of the region and simultaneously an item corresponding to an operated button is selected from the plurality of items.

## Description

### TECHNICAL FIELD

The present invention relates to a content display apparatus, for example, a display device having no pointing device, for enhancing operability such as selection of an item to which an anchor tag is attached in a Web site.

### BACKGROUND ART

In a display device having no pointing device such as a cellular phone or a TV, when a user generally views a Web site through a PC, direction keys (an up key, a down key, a left key, and a right key) serve both as a focus operation of an item (hereinafter referred to as "anchor") to which an anchor tag is attached and a scroll operation.

More specifically, if the down key among direction keys is pressed, a focus of an anchor moves in a lower direction. Then, if the down key is additionally pressed after an anchor displayed in the lowest part of a display screen is focused, the display screen scrolls down. This increases the number of key operations if the user scrolls down the display screen or clicks a desired anchor, which deteriorates operability of the display screen.

To solve this conventional problem, Cited reference 1 discloses a method of automatically allocating ten keys to anchors within content to facilitate an anchor selection of a user. More specifically, a specific tag (for example, an anchor tag) is extracted from content data, a ten key is allocated to the extracted tag, and, if a predetermined ten key is pressed, an anchor jump corresponding to the pressed ten key is performed. If the number of anchors is greater than the number of ten keys, an allocation of ten keys to anchors is updated by pressing direction keys.

However, an allocation of a ten key to a specific tag is determined according to a sequence of describing anchor tags within content data, and locations of anchors to which ten keys are allocated are scattered and arranged on an actual screen, which make it difficult for the user to recognize anchors to which ten keys are allocated.

Furthermore, Cited reference 2 discloses a method of dividing a screen into a plurality of regions and allocating ten keys to the regions to facilitate an anchor selection of a user. More specifically, if locations of remote buttons of ten keys are allocated to regions, for example, a key "1" is pressed, a region corresponding to the key "1" is selected, and thus, a focus moves to one anchor within the selected region.

However, if a plurality of anchors are included in divided regions, there is a problem that the number of operations of direction keys to select a desired anchor within a corresponding region after the corresponding region is selected increases.

### [Prior Art]

[Patent Document 1] Japanese Patent Publication No. 2009-169883
[Patent Document 2] Japanese Patent Publication No. 2007-74460

### DETAILED DESCRIPTION OF THE INVENTION

### TECHNICAL PROBLEM

The present invention provides facilitation of an anchor operation through ten keys using location information within a screen of an item to which a predetermined tag is attached.

### TECHNICAL SOLUTION

To solve the above-described problems, according to an aspect of the present invention, there is provided facilitation of an anchor operation using available buttons of an operation device such as ten keys, which is made by a non-conventional idea of using location information within a screen of an item to which a predetermined tag is attached.

### DESCRIPTION OF THE DRAWINGS

FIG. 1 is a schematic configuration diagram of a content display apparatus according to an embodiment of the present invention;
FIG. 2 is a flowchart illustrating an operation of a content display apparatus according to an embodiment of the present invention;
FIG. 3 is a screen view illustrating a content drawing region according to an embodiment of the present invention;
FIG. 4 illustrates a content layout according to an embodiment of the present invention;
FIG. 5 illustrates drawing region information according to an embodiment of the present invention;
FIG. 6 illustrates an anchor list according to an embodiment of the present invention;
FIG. 7 illustrates a content layout and a screen division example according to an embodiment of the present invention;
FIG. 8 illustrates a screen example by using a screen partition unit;
FIG. 9 illustrates a key and anchor correspondence list according to an embodiment of the present invention;
FIGS. 10A and 10B illustrate screen division examples according to modified embodiments of the present invention; and
FIG. 11 illustrates a screen division example according to a modified embodiment of the present invention.

### <Explanations of Reference Numerals>

- 100: content display apparatus
- 2: display device
- W: screen
- 3: browser unit
- 4: operation device
- 4a: ten key
- 4b: direction key
- 4c: decision key
- 33: screen display unit
- 34: location information extraction unit
- 35: screen partitioning unit
- 36: item management unit

### BEST MODE

According to an aspect of the present invention, there is provided a content display apparatus including: a display unit having a screen; a browser unit for analyzing content data described in a markup language and drawing content presenting corresponding content data in the screen; an operation device for operating the screen of the display unit; a location information extraction unit for extracting display location information within the screen of a plurality of items to which predetermined tags described in the content data are attached; a screen partitioning unit for partitioning the screen on which the content is displayed based on the display location information so that the plurality of items exist in one region; an item management unit for allocating available buttons of the operation device to the plurality of items of the region; and a drawing management unit for selecting an item corresponding to an operated button from the plurality of items. In this regard, the "selecting an item corresponding to an operated button" includes moving a focus to an item corresponding to the operated button or drawing content linking to a corresponding item.

The content display apparatus partitions a screen based on indication location information in the screen of items to which predetermined tags are attached, and allocates buttons to items included in the corresponding partitioned screens, which facilitates recognition of the items to which the buttons are allocated, thereby enhancing user operability. Further, the buttons are allocated based on written locations of anchor tags in content data, and the screen is divided irrespective of content, thereby enhancing user operability compared to the allocation of the buttons to regions of the screen.

In this regard, to further enhance user operability, the operation device may include ten keys and direction keys, wherein the ten keys are allocated to the plurality of items, wherein the direction keys are used to scroll the screen on which the content is displayed.

The number of buttons that can be allocated within a region is limited like a case where the number of operable buttons of the operation device is for example 10 or 12. In this regard, the screen partitioning unit may partition the screen so that the number of items existing in each region is approximately equal. A screen on which content is displayed may be uniformly divided based on the number of operable buttons.

In a case where the screen on which content is displayed is divided into a plurality of regions, in order to move at a limited number of operations in each region, the screen partitioning unit may allocate each available button of the operation device to each region partitioned based on the display location information, wherein the drawing management unit selects a region corresponding to an operated button.

For example, in a case where a currently focused item exists in a region to which a button "1" is allocated, if a focus is to be moved to a desired item existing in a region to which a button "9" is allocated, the focus may be moved to the region to which the button "9" is allocated through one operation by pressing the button "9". Thereafter, a corresponding desired image may be selected by pressing a button allocated to the desired item in the region to which the button "9" is allocated.

The screen partitioning unit may partition the screen on which the content is displayed based on the display location information so that the plurality of items exist in one region with respect to a predetermined item, wherein the item management unit allocates the available buttons of the operation device to the plurality of items in the sequence of items closer to the predetermined item. In this regard, the predetermined item may be an item displayed at a predetermined location, for example, the center or top left, on the screen on which content is displayed as well as a currently focused item. Then, items to which available buttons are allocated are disposed with respect to the predetermined item, which facilitates recognition of the items to which the buttons are allocated, thereby enhancing user operability.

To further enhance user operability by allowing the user to visually recognize the buttons allocated to the items, the drawing management unit may display correspondence relationship information between the plurality of items and the allocated buttons on the screen on which the content is displayed.

To enhance user operability by facilitating determination of whether a desired item exists in a region including items to which available buttons are allocated by displaying a range of the region, the drawing management unit may display region ranges presenting ranges of partitioned regions on the screen on which the content is displayed.

To enhance user operability by allowing the user to select a partitioning form customized to the user, the drawing management unit may display a selection screen used by a user to select a partitioning form of the screen on which the content is displayed.

According to another aspect of the present invention, there is provided a content display method performed by a content display apparatus comprising a display unit having a screen, a browser unit for analyzing content data described in a markup language and drawing content presenting corresponding content data in the screen, and an operation device for operating the screen of the display unit, the method including: a location information extraction operation of extracting display location information within the screen of a plurality of items to which predetermined tags described in the content data are attached; a screen partitioning operation of partitioning the screen on which the content is displayed based on the display location information so that the plurality of items exist in one region; an item management operation of allocating available buttons of the operation device to the plurality of items of the region and simultaneously selecting an item corresponding to an operated button from the plurality of items.

### MODE OF THE INVENTION

Hereinafter, the present invention will be described in detail by explaining an exemplary embodiment of a content display apparatus 100 with reference to the attached drawings.

The content display apparatus 100 of the present embodiment receives content data of a Web site acquired from the Internet and displays content of the content data on a screen. The content display apparatus 100 is included in a device having no pointing device, such as a cellular phone in which a display device and an operation device are integrally formed or a TV in which a display device and an operation device are separated from each other and uses a signal like infrared rays to operate.

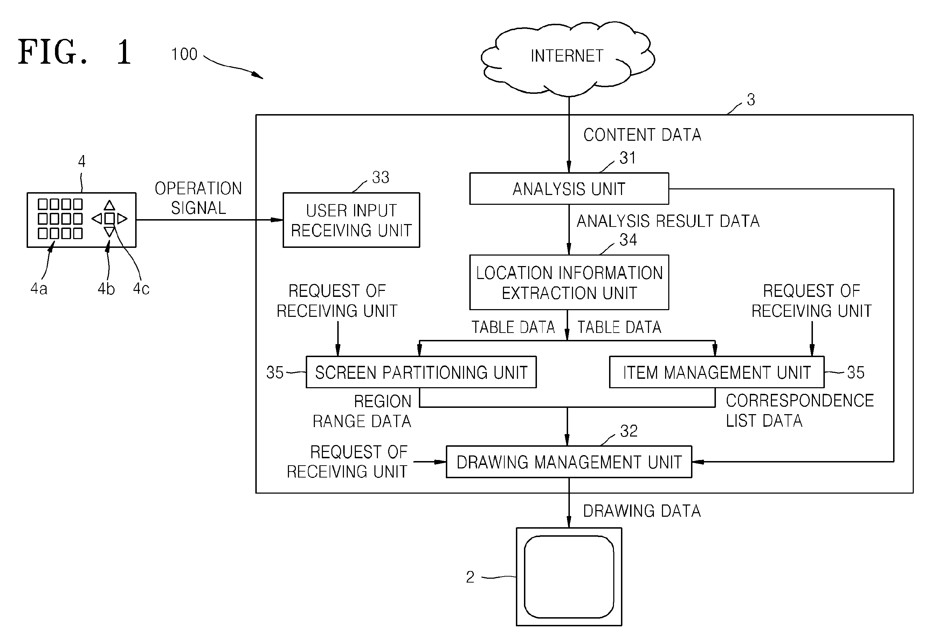

More specifically, as shown in FIG. 1, the content display apparatus 100 includes a display device 2 having a screen, a browser unit 3 that analyzes content data described in a Markup Language and draws content of the content data, and an operation device 4 that operates the screen of the display device 2.

The operation device 4 includes ten keys 4a (a "0" key, a "1" key, ..., a "9" key, a "*" key, and a "#" key), direction keys 4b (an up key, a down key, a right key, and a left key), and a decision key 4c. As will be described below, pressing the ten keys 4a long is used for a region division operation, and pressing the ten keys 4a short is used for a corresponding anchor item or region selection operation. The direction keys 4b are used for a scroll operation of the content displayed on the screen. If it is impossible to scroll in a designated direction, the direction keys 4b are used for a region selection in the designated direction.

The browser unit 3 of the content display apparatus 100 of the present embodiment includes, as shown in FIG. 1, an analysis unit 31 that analyzes the content data, a drawing management unit 32 that draws the content of the content data on the screen as a result of analysis, a user input receiving unit 33 that receives a user input from the operation of the operation device 4, a location information extraction unit 34 that extracts indication location information of items (hereinafter referred to as "anchor items") to which anchor tags (formed by <a></a>) are attached, a screen partitioning unit 35 that partitions the screen based on the display location information, and an item management unit 36 that allocates the ten keys 4a of the operation device 4 to respective anchor items.

The browser unit 3 is also an exclusive or general-purpose computer including a CPU, a memory, an input/output interface, etc., and functions the respective units 31 through 36 are performed by cooperating with the CPU and other peripheral devices using programs stored in the memory.

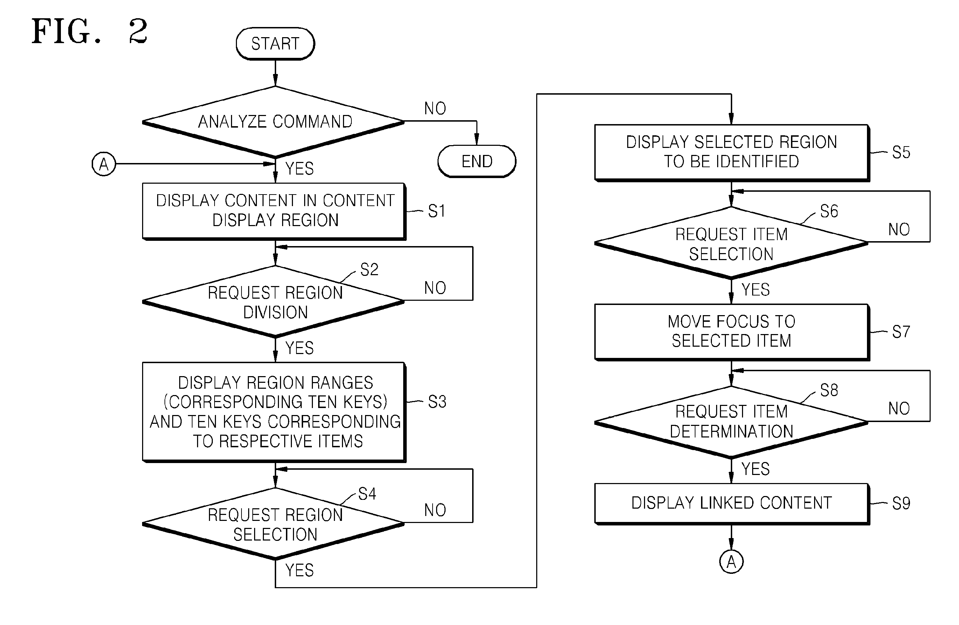

The functions of the respective units 31 through 36 and the operation of the content display apparatus 100 will now be described. FIG. 2 is a flowchart illustrating an operation of the content display apparatus 100 from a general operation of displaying content to an operation of selecting an anchor item according to an embodiment of the present invention.

The analysis unit 31 of the browser unit 3 receives the content data of the Web site acquired from the Internet and analyzes the content data. Then, the analysis unit 31 outputs the analysis result to the drawing management unit 32 and the location information extraction unit 34.

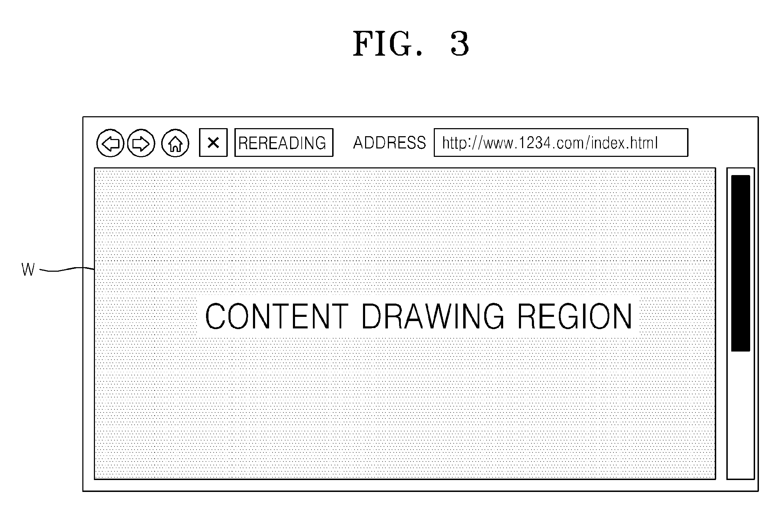

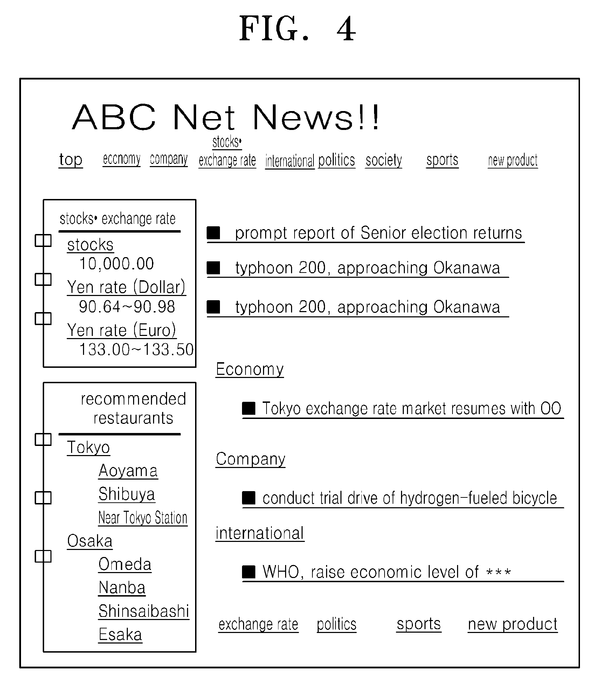

The drawing management unit 32 draws the content on the screen of the display device 2, as shown in FIG. 3, based on the analysis result obtained by the analysis unit 31 (operation S1). Hereinafter the screen on which the content is displayed is referred to as a content drawing region W. FIG. 4 illustrates sample content to explain the present embodiment.

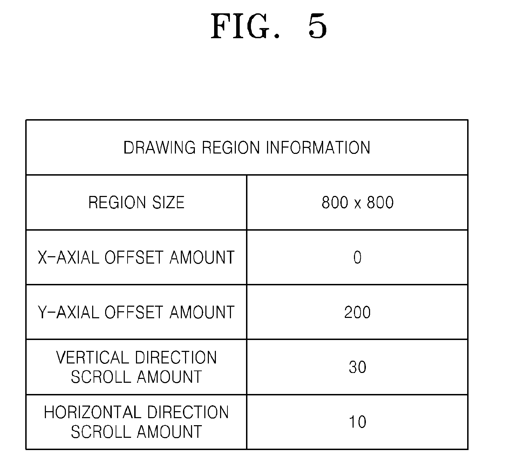

The drawing management unit 32, as shown in FIG. 5, manages drawing region information such as a region size, an X-axis offset amount, a Y-axis offset amount, a vertical (up and down) direction scroll amount, and a horizontal (left and right) direction scroll amount. If the drawing management unit 32 receives a scroll request for the direction keys 4b from the user input receiving unit 33, the drawing management unit 32 scrolls the content by a scroll amount defined in the drawing region information in a designated direction and updates the X-axis offset amount and the Y-axis offset amount.

The user input receiving unit 33 receives an operation signal generated when a user operates the operation device 4 and detects a type of a button (the ten keys 4a and the direction keys 4b) pressed from the received operation signal and short or long pressing of the corresponding button. The user input receiving unit 33 outputs requests corresponding to the ten keys 4a and the direction keys 4b to the respective units.

More specifically, if the user input receiving unit 33 detects long pressing of the ten key 4a, the user input receiving unit 33 outputs a region division request to the screen partitioning unit 35 (operation S2). If the user input receiving unit 33 detects short pressing of the ten key 4a, the user input receiving unit 33 outputs a selection request of a region or anchor item corresponding to the corresponding ten key 4a to the drawing management unit 32 (operations S4 and S6). If the user input receiving unit 33 detects pressing of the direction key 4b, the user input receiving unit 33 outputs the scroll request described above with respect to the drawing management unit 32.

The location information extraction unit 34 extracts indication location information within the screen of the anchor items described in the content data based on the analysis result obtained by the analysis unit 31. More specifically, the location information extraction unit 34 prepares a table (an anchor list) that manages information regarding the anchor items included in the content based on the analysis result.

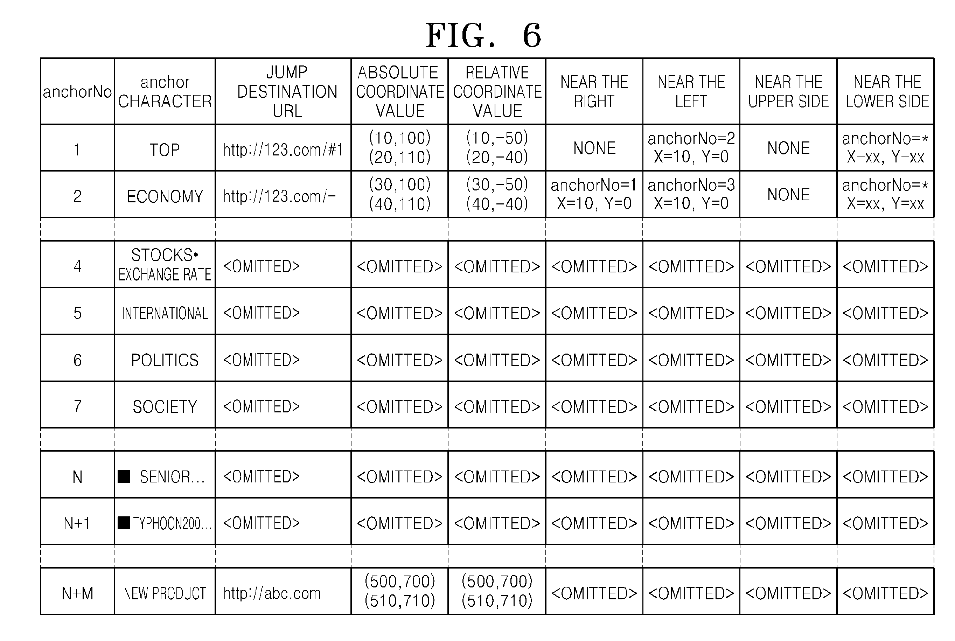

The anchor list includes, as shown in FIG. 6, an anchor item number, an anchor item character, a URL of a jump destination, an absolute coordinate value from a reference location (for example, top left of content) in a content layout result, a relative coordinate value from a reference location (for example, top left of content) in the content drawing region W (or near 8), and anchor items near 4 (or 8). The anchor list also includes a relative distance between other anchor items near an anchor item. The relative coordinate value is often updated based on a corresponding scroll amount if the drawing management unit 32 scrolls the content. The location information extraction unit 33 prepares a table that manages information regarding an access key if the content includes a definition of the access key.

The screen partitioning unit 35 partitions the content drawing region W based on the indication location information obtained by the location information extraction unit 33. More specifically, the screen partitioning unit 35 partitions the content drawing region W in such a way that one region includes a plurality of anchor items.

The screen partitioning unit 35 of the present embodiment partitions each region to have approximately the same number of anchor items. In more detail, the screen partitioning unit 35 partitions the content drawing region W by acquiring the anchor list from the location information extraction unit 33 so that one region includes the same number of anchor items as the number (10) of ten keys.

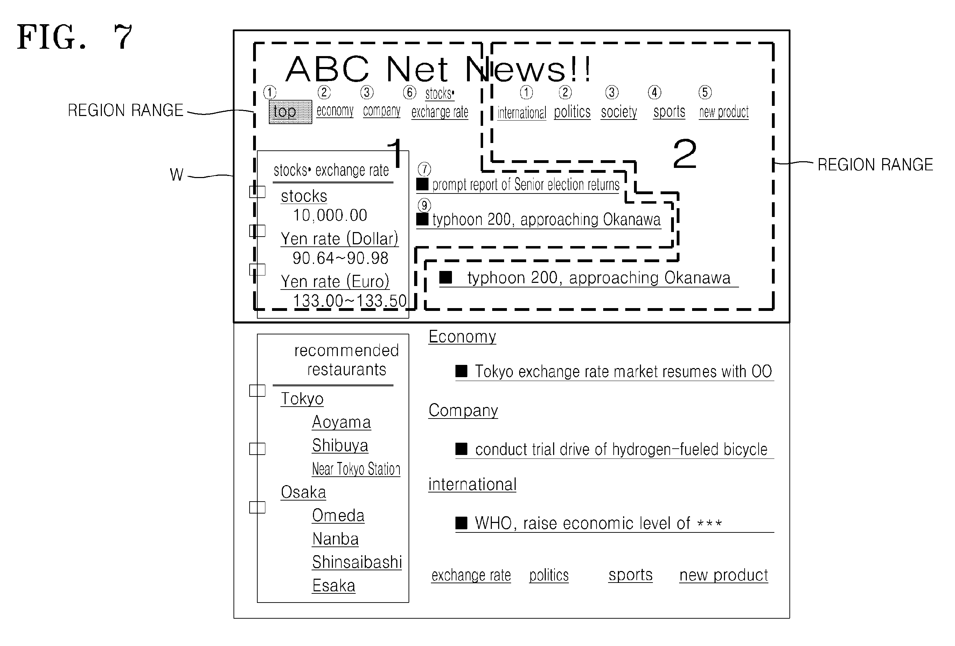

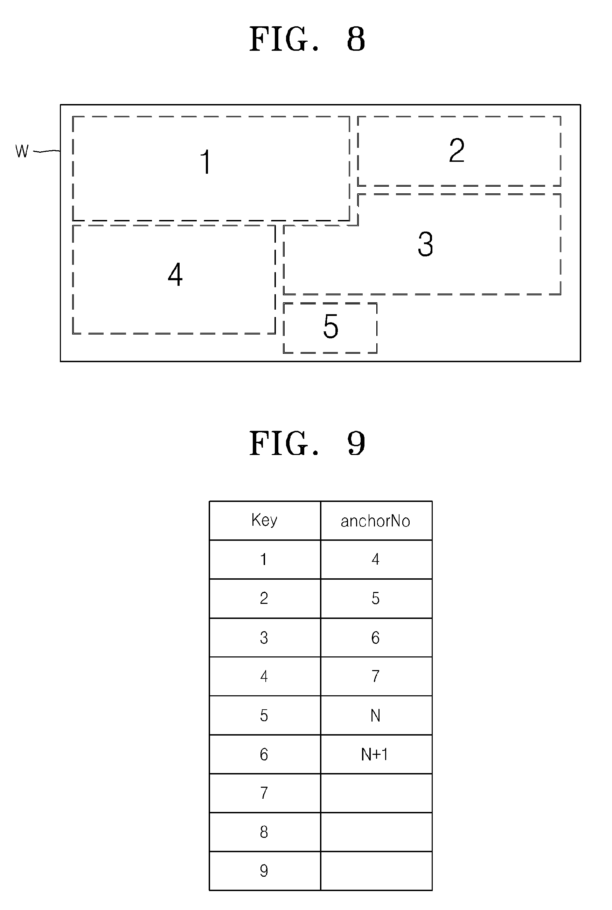

FIG. 7 illustrates an example of partitioning all content presented in the content drawing region W and dividing the content into a plurality of regions. The content presented in the content drawing region W includes 16 anchor items. In this case, the screen partitioning unit 35 partitions the content drawing region W into two regions so that a left region includes 10 anchor items, and a right region includes the other anchor items. In FIG. 7, the content drawing region W is divided into the left and right regions but it may be divided into upper and lower regions. The content drawing region W is divided into, for example, 5 regions as shown in FIG. 8 according to anchor items included in the content presented in the content drawing region W.

The screen partitioning unit 35 also allocates the ten keys 4a to the partitioned regions and prepares a correspondence list of the corresponding regions and the allocated ten keys 4a. The screen partitioning unit 35 outputs region range data indicating ranges of the partitioned regions and correspondence list data indicating the correspondence list to the drawing management unit 32. The drawing management unit 32 that acquires the region range data and the correspondence list data displays the region ranges in the content drawing region W and simultaneously displays the allocated ten keys 4a in the regions within the region ranges (operation S3). The region ranges are displayed as dashed boundary lines in FIG. 7. The region ranges may be differently displayed such as region ranges in different colors.

Such a region division is performed if the user input receiving unit 33 detects long pressing of the predetermined ten key 4a. In FIG. 2, as shown in the operation of displaying content, the drawing management unit 32 usually draws the content of the content data obtained by the analysis unit 31 in the content drawing region W (operation S1). The user input receiving unit 33 that detects long pressing of the predetermined ten key 4a outputs a region division request to the screen partitioning unit 35 (operation S2). The screen partitioning unit 35 that receives the region division request partitions the screen. With respect to the region division request, if the user input receiving unit 33 receives long pressing of the ten keys 4a, the user input receiving unit 33 outputs the region division request to the screen partitioning unit 35 and simultaneously manages a long pressing receiving status, and operates a timer for determining a valid time of long pressing. In the long pressing receiving status, the user input receiving unit 33 restarts the timer. Thereafter, the drawing management unit 32 that receives the region range data displays the region ranges (operation S3).

A selection of each region is performed if the user input receiving unit 33 detects short pressing of the individual ten keys 4a in a state where no region is selected or in a region selection operation (operation S4). For example, if the user input receiving unit 33 detects short pressing of a "1" key, the left region is selected. In this regard, the selected region (the left region) and the non-selected region (the right region) may be displayed by differently indicating the region ranges (for example, light and shade).

In this regard, for example, if a region to which the "1" key is allocated is selected and then a region to which another ten key (a "2" key) is allocated is selected, a selection may be changed to the region to which the "2" key is allocated by pressing the "2" key long. If the operation device 4 further includes an available button, for example, an "undo" key, in addition to the ten keys 4a, the direction keys 4b, and the decision key 4c, when the user input receiving unit 33 detects pressing of the "undo" key, an operation state before one operation is performed may be returned.

In addition to the region division performed by the screen partitioning unit 35 if the region division request is received, if the region division is set to be automatically performed and the region division request is received, the drawing management unit 32 displays the divided region ranges and the ten keys 4a allocated to the corresponding divided regions to be identified from each other. In this regard, the ten keys 4a allocated to the divided regions may be displayed to overlap with the content, or a list presenting corresponding relations between the divided regions and the allocated ten keys 4a may be displayed.

The item management unit 36 allocates the ten keys 4a to the anchor items included in the regions partitioned by the screen partitioning unit 35. More specifically, the item management unit 36 prepares a key and anchor correspondence list indicating correspondences between the ten keys 4a and the anchor items (for example, anchor numbers) included in the anchor list (see FIG. 9). The item management unit 36 outputs the key and anchor correspondence list to the drawing management unit 32.

The drawing management unit 32 that receives the key and anchor correspondence list displays the ten keys 4a allocated to the anchor items in the content drawing region W so that the correspondence relations between the allocated ten keys 4a and the anchor items can be identified (operation S5). More specifically, the allocated ten keys 4a may be displayed to overlap with the content near the anchor items, or a list presenting corresponding relations between the allocated ten keys 4a and the anchor items may be displayed.

After a region selection is performed (operation S5), if the user input receiving unit 33 detects short pressing of the predetermined ten key 4a (operation S6), when information regarding the corresponding ten key 4a is included in the key and anchor correspondence list, a focus is moved to the anchor item corresponding to the predetermined ten key 32 (operation S7). If the drawing management unit 32 receives an item decision request from the user input receiving unit 33 (operation S8), the drawing management unit 32 draws a Web site of an URL linking to the corresponding anchor item in the content drawing region W (operation S9).

For example, if the "1" key is pressed to select the left region in FIG. 7 as described above, when the "3" key is additionally pressed short, the drawing management unit 32 selects a tanker item of an "enterprise" and moves the focus to the "enterprise". Thereafter, if the user presses the decision key 4c, the user input receiving unit 33 outputs the item decision request to the analysis unit 31 and the drawing management unit 36. Then, the analysis unit 31 acquires and analyzes content data of an URL linking to the "enterprise". The drawing management unit 32 draws the content of the content data in the content drawing region W.

In this regard, the drawing management unit 32 does not move the focus to the anchor item corresponding to the predetermined ten key 4a or does not wait for pressing the decision key 4c but may allow to directly jump to the URL indicating the anchor item. If the information regarding the predetermined ten key 4a is not included in the key and anchor correspondence list, the drawing management unit 32 processes an access key table.

If the drawing management unit 32 receives a reset request for the key and anchor correspondence list from the user input receiving unit 33, the drawing management unit 32 clears corresponding list data and moves the focus to the leading anchor item of the content drawing region W. The user input receiving unit 33 outputs the reset request to the drawing management unit 32 and the item management unit 36 if the user input receiving unit 33 detects long pressing of the ten key 4a for a predetermined period of time.

If the user scrolls down content, the down key is pressed. The user input receiving unit 33 that receives the operation signal outputs a scroll request to the drawing management unit 32. The drawing management unit 32 scrolls the content based on the scroll request. After the content is scrolled, the screen partitioning unit 35 partitions the screen again with respect to the content newly displayed in the content drawing region W. Simultaneously, the item management unit 36 allocates the ten keys 4a to items included in each region.

### <Effect of the Present Embodiment>

The above-described content display apparatus 100 according to the present embodiment partitions a screen based on indication location information in the screen of items to which predetermined tags are attached, and allocates buttons to items included in the corresponding partitioned screens, which facilitates recognition of the items to which the buttons are allocated, thereby enhancing user operability. Further, the buttons are allocated based on written locations of anchor tags in content data, and the screen is divided irrespective of content, thereby enhancing user operability compared to the allocation of the buttons to regions of the screen.

In the buttons of the operation device 4, the ten keys 4a are allocated to anchor items or regions, whereas the direction keys 4b are used to scroll to share functions of the ten keys 4a and the direction keys 4b, thereby enhancing user operability. The anchor item can be selected only by operating the ten keys 4a, thereby reducing a movement distance of a finger on the operation device 4 as much as possible.

### <Other Modified Embodiments>

The present invention is not limited to the embodiment described above.

For example, a screen partition unit may partition a content drawing region based on indication location information so that a plurality of items exist in one region with respect to a circle of a predetermined item.

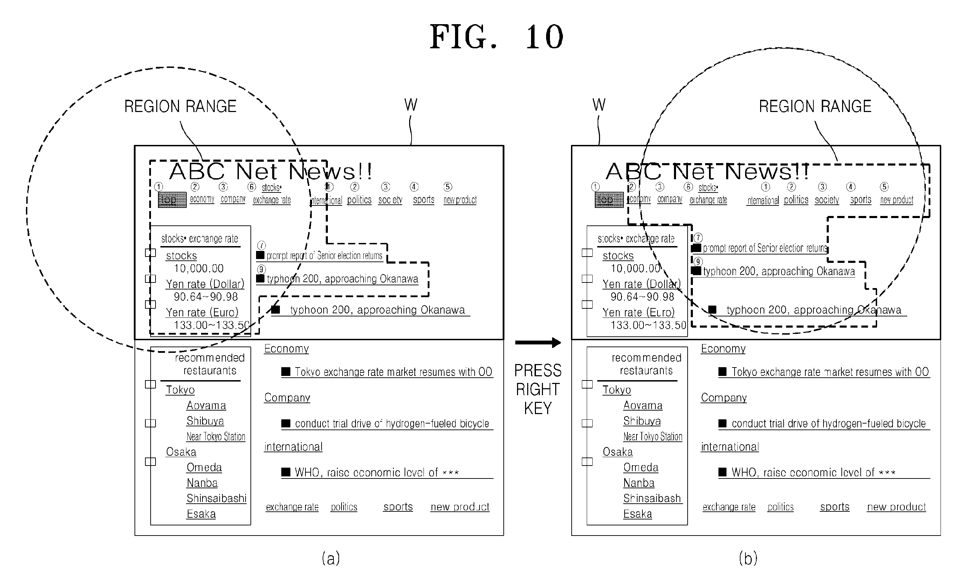

More specifically, as shown in FIG. 10A, the screen partition unit partitions the content drawing region as a first division so that a plurality (number of ten keys) of items exist in one region with respect to a circle of an anchor item (a currently focused item) existing leftmost of the content drawing region. An item management unit allocates ten keys in the sequence of the ten key closest to the currently focused item. In this regard, a method of allocating the ten keys to items may allocate the ten keys in the sequence of 1, 2, ..., closer to the items or may allocate the ten keys in the sequence of 1, 2, ..., with respect to a horizontal direction. The ten keys may be allocated to the items in accordance with an arrangement of the ten keys in an operation device.

For example, if a decision key is pressed short, an item management unit allows to jump to an URL of the currently focused anchor item, and if the decision key is pressed long, the ten keys are allocated to anchor items that are laid out around a circle of the currently focused anchor item. A rectangular region is displayed on a screen to enter a region selection state in order to identify a range (a partitioned range) to which the ten keys are allocated. In this regard, the ten keys may not be allocated to the currently focused anchor item.

In this status, if a direction key (for example, a right key) is pressed, as shown in FIG. 10B, the item management unit allocates ten keys to anchor items that are laid out around a circle of the closest anchor item to a designated direction (for example, right) of the partitioned region. The screen partitioning unit also displays a rectangular region on a screen in order to identify a range (a partitioned range) to which the ten keys are allocated.

According to the above-described content display apparatus, items to which ten keys are allocated are arranged around a predetermined item, which facilitates recognition of the items to which buttons are allocated, thereby enhancing user operability. Also, if a direction key is pressed, the ten keys are allocated with respect to the closest anchor item to a corresponding region again, thereby very easily operating a movement of a focused anchor item.

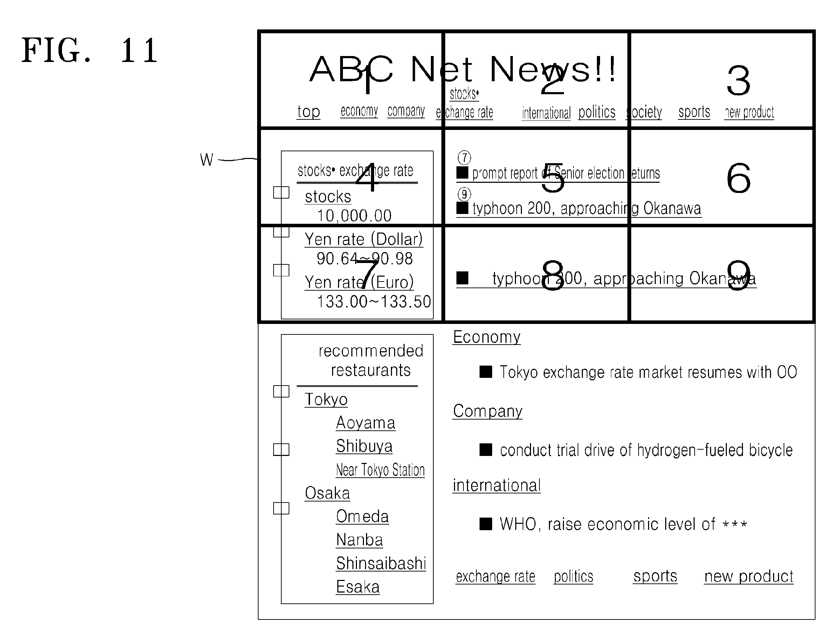

A screen partitioning unit may divide a content drawing region not based on location information of an anchor item but a previously defined division form (for example, dividing the content drawing region in a grid shape or dividing it into regions having an equal area) (9 regions divided into 3 vertically and horizontally in FIG. 11), partition a region selected from the divided regions based on the location information as described in the embodiment, and allocate ten keys to anchor items.

A user may select a plurality of partitioned forms (as described in the respective embodiments. In this case, a drawing management unit displays a selection screen of a partitioned form on a screen. The drawing management unit outputs a signal indicating a partitioning form determined based on a user operation acquired by a user input receiving unit to a screen partitioning unit. The screen partitioning unit that receives the signal partitions the screen on which content is displayed in the form selected by the user.

In addition, although items to which anchor tags are attached are described in the above embodiments, items to which tags formed by other form tags (<form></form>) are attached may be used.

Furthermore, although after a screen is partitioned by the screen partitioning unit, ten keys are allocated to anchor items existing in partitioned regions in the above embodiment, after ten keys are allocated to anchor items, the screen may be partitioned to include the allocated ten keys.

While the present general inventive concept has been particularly shown and described with reference to exemplary embodiments thereof, it will be understood by those of ordinary skill in the art that various changes in form and details may be made therein without departing from the spirit and scope of the present general inventive concept as defined by the following claims.

### ADVANTAGEOUS EFFECTS

According to the present invention, an anchor operation can be facilitated by tens keys using location information on a screen of items to which predetermined tags are attached.

### INDUSTRIAL APPLICABILITY

The present invention relates to a content display apparatus, and can be generally applied to a computer, a TV, a cellular phone, etc.

## Claims

1. A content display apparatus comprising:
a display unit having a screen;
a browser unit for analyzing content data described in a markup language and drawing content presenting corresponding content data in the screen;
an operation device for operating the screen of the display unit;
a location information extraction unit for extracting display location information within the screen of a plurality of items to which predetermined tags described in the content data are attached;
a screen partitioning unit for partitioning the screen on which the content is displayed based on the display location information so that the plurality of items exist in one region;
an item management unit for allocating available buttons of the operation device to the plurality of items of the region; and
a drawing management unit for selecting an item corresponding to an operated button from the plurality of items.

2. The content display apparatus of claim 1, wherein the screen partitioning unit partitions the screen so that the number of items existing in each region is approximately equal.

3. The content display apparatus of claim 1 or 2, wherein the screen partitioning unit allocates each available button of the operation device to each region partitioned based on the display location information,
wherein the drawing management unit selects a region corresponding to an operated button.

4. The content display apparatus of claim 1, wherein the screen partitioning unit partitions the screen on which the content is displayed based on the display location information so that the plurality of items exist in one region with respect to a predetermined item,
wherein the item management unit allocates the available buttons of the operation device to the plurality of items in the sequence of items closer to the predetermined item.

5. The content display apparatus of claim 1, 2, 3, or 4, wherein the operation device includes ten keys and direction keys,
wherein the ten keys are allocated to the plurality of items,
wherein the direction keys are used to scroll the screen on which the content is displayed.

6. The content display apparatus of claim 1, 2, 3, 4, or 5, wherein the drawing management unit displays correspondence relationship information between the plurality of items and the allocated buttons on the screen on which the content is displayed.

7. The content display apparatus of claim 6, wherein the drawing management unit displays region ranges presenting ranges of partitioned regions on the screen on which the content is displayed.

8. The content display apparatus of claim 1, 2, 3, 4, 5, 6, or 7, wherein the predetermined tags are anchor tags or form tags.

9. The content display apparatus of claim 1, 2, 3, 4, 5, 6, 7, or 8, wherein the drawing management unit displays a selection screen used by a user to select a partitioning form of the screen on which the content is displayed.

10. A content display method performed by a content display apparatus comprising a display unit having a screen, a browser unit for analyzing content data described in a markup language and drawing content presenting corresponding content data in the screen, and an operation device for operating the screen of the display unit, the method comprising:
a location information extraction operation of extracting display location information within the screen of a plurality of items to which predetermined tags described in the content data are attached;
a screen partitioning operation of partitioning the screen on which the content is displayed based on the display location information so that the plurality of items exist in one region;
an item management operation of allocating available buttons of the operation device to the plurality of items of the region and simultaneously selecting an item corresponding to an operated button from the plurality of items.
